# EUROPÄISCHE PATENTSCHRIFT

(11) **EP 3 650 259 B1**
(45) Veröffentlichungstag und Bekanntmachung des Hinweises auf die Patenterteilung: **08.05.2024**
(21) Anmeldenummer: 19205008.6
(22) Anmeldetag: 24.10.2019
(51) Int. Cl.: B60L 1/00, B60L 1/02, B60L 7/10, B60L 50/16, B60L 50/60

(54) **VERFAHREN ZUM BETRIEB EINES KRAFTFAHRZEUGS UND KRAFTFAHRZEUG**
MOTOR VEHICLE AND METHOD FOR OPERATING A MOTOR VEHICLE
PROCÉDÉ DE FONCTIONNEMENT D'UN VÉHICULE AUTOMOBILE ET VÉHICULE AUTOMOBILE

(30) Priorität: 12.11.2018 DE 102018219208
(43) Veröffentlichungstag der Anmeldung: 13.05.2020
(73) Patentinhaber: Audi AG, 85045 Ingolstadt (DE)
(72) Erfinder: Hohm, Christopher, 80804 München (DE); Vogt, Michael, 80799 München (DE); Breimhorst, Norbert, 85055 Ingolstadt (DE); Appel, Stefan, 80804 München (DE)

(56) Entgegenhaltungen:
- DE-A1- 4 446 219
- DE-A1-102016 224 199
- GB-A- 2 550 955
- JP-A- S6 335 103
- JP-A- 2005 324 729
- US-A1- 2010 194 318

## Beschreibung

Die Erfindung betrifft ein Verfahren zum Betrieb eines Kraftfahrzeugs gemäß Anspruch 1. Ferner betrifft die Erfindung ein Kraftfahrzeug gemäß Anspruch 9.

Bei Kraftfahrzeugen, welche wenigstens einen Elektromotor für einen Hybridantrieb oder einen rein elektrischen Antrieb aufweisen, ist es bekannt, beispielsweise zur Erhöhung einer Reichweite eines elektrischen Fahrbetriebes des Kraftfahrzeuges, über den wenigstens einen Elektromotor Energie zu rekuperieren und diese einem Energiespeicher des Kraftfahrzeuges zuzuführen. Auf diese Weise kann mechanische Bewegungsenergie des Kraftfahrzeuges zurückgewonnen und für einen erneuten elektrischen Fahrbetrieb des Kraftfahrzeuges durch die elektrische Maschine verwendet werden. Es ist auch bekannt, dass Fahrzeuge mit Hybridantrieb oder einem rein elektrischen Antrieb mehr als eine elektrische Maschine aufweisen, wodurch auch die Möglichkeit besteht, über mehr als eine elektrische Maschine Energie zu rekuperieren.

In DE 102 02 531 A1 wird ein Verfahren zur Steuerung eines Hybridantriebs eines Fahrzeugs offenbart. Der Hybridantrieb umfasst dabei als Antriebsmaschine eine Verbrennungskraftmaschine und wenigstens eine elektrische Maschine, welche mit einem Antriebsstrang des Kraftfahrzeuges wirkverbindbar sind. Bei einem Bremsen des Kraftfahrzeuges wird eine kennfeldbasierte Ansteuerung der wenigstens einen elektrischen Maschine in einem generatorischen Betriebsmodus vorgenommen.

DE 10 2013 205 221 A1 beschreibt ein Verfahren mit einer Vorrichtung zum Betrieb eines DC/DC-Abwärtswandlers zur elektrischen Ansteuerung eines Hybridkraftfahrzeugs. Mittels des Abwärtswandlers wird eine von einer Hochspannungsquelle bereitgestellte Hochspannung in eine für wenigstens einen elektrischen Verbraucher des Hybridkraftfahrzeugs vorgesehene elektrische Niederspannung umgewandelt. Bei einem elektrischen Fahrbetrieb des Hybridkraftfahrzeuges wird die von dem Abwärtswandler bereitgestellte elektrische Niederspannung auf ein Spannungsniveau unterhalb einer durch eine auf der Niederspannungsseite des Abwärtswandlers vorgesehenen Niederspannungsquelle bereitgestellten Niederspannung eingestellt.

GB 2550955 A beschreibt ein elektrisches Fahrzeug, welches ein Batteriemanagementsystem zur Steuerung einer ersten Batterie und einer zweiten Batterie umfasst. Weiterhin weist das Kraftfahrzeug zwei jeweils einen elektrischen Motor umfassende Antriebsstränge auf, wobei ein Antriebsstrang einer Hinterachse und der andere Antriebsstrang einer Vorderachse des Kraftfahrzeugs zugeordnet ist. Die erste Batterie und die zweite Batterie können den Antriebssträngen jeweils einzeln zugeschaltet werden oder es kann, eine Parallelschaltung der Batterien über den Schalter erfolgen. Die beiden Bremssysteme können jeweils in einem Bremsbetrieb des Kraftfahrzeugs Energie rekuperieren, welche in den Batterien gespeichert wird. In dem Fall, dass eine der beiden Batterien eine geringere Spannung aufweist, so dass eine Parallelschaltung der Batterien aufgrund der Spannungsdifferenz nicht möglich ist, kann durch den Schalter eine Trennung der Batterien erfolgen, wobei über das eine regenerative Bremssystem Energie in die eine, als Master-Batterie bezeichnete Batterie und über das andere regenerative Bremssystem in die andere, als Slave-Batterie bezeichnete Batterie rekuperiert wird. Die Zuteilung der Rekuperationsleistung auf die regenerativen Bremssysteme erfolgt dabei spannungsabhängig, so dass der Batterie mit einer niedrigeren Spannung ausgehend von einer Gesamtbremsleistung mehr Energie zugeführt wird, um den Spannungsunterschied zwischen den Batterien auszugleichen.

DE 10 2016 224 199 A1 beschreibt ein Hybridfahrzeug, welches zwei Elektromotoren umfasst. Die Elektromotoren sind dabei zum Antreiben je eines Rades einer der Achsen des Kraftfahrzeugs vorgesehen. Dabei sind die Elektromotoren jeweils über einen der parallel verlaufenden Kabelstränge mit einer Stromversorgung verbunden. An den parallel verlaufenden Kabelsträngen sind jeweils mehrere Verbraucher des Kraftfahrzeugs angeschlossen, welche einen generatorischen Betrieb der Elektromotoren unter anderem dadurch regeln, dass einzelne Verbraucher zu- oder abgeschaltet werden.

DE 44 46 219 A1 offenbart ein Kraftfahrzeug mit mehreren Elektromotoren, welche dem Antrieb von Rädern dienen und einer oder mehreren Fahrzeugachsen zugeordnet sind. Durch eine Steuereinrichtung des Kraftfahrzeugs können die Elektromotoren unabhängig voneinander auf einen Antriebsbetrieb, auf einen generatorischen Bremsbetrieb mit Energierückgewinnung oder auf einen gegenmotorischen Bremsbetrieb eingestellt werden. Dabei ist ein erster Elektromotor einer Vorderachse und ein zweiter Elektromotor einer Hinterachse des Kraftfahrzeugs zugeordnet und über jeweils ein Getriebe mit der Achse gekoppelt. Über eine Steuereinrichtung kann im Rahmen einer optimierten Bremskraftverteilung jeweils ein Steuerbefehl an die Elektromotoren übermittelt werden, wobei je nach Bremsleistungsbedarf die Elektromotoren entweder als Generator mechanische in elektrische Energie wandeln oder auf einen gegenmotorischen Betrieb geschaltet werden. Im generatorischen Betrieb zurückgewonnene Energie kann im Fahrzeug verwertet werden und dabei in einer Batterie gespeichert oder über einen elektrischen Widerstand verbraucht werden. Neben dem Widerstand kann die elektrische Energie auch über einen der beiden Motoren, der im gegenmotorischen Betrieb arbeitet, abgebaut werden.

US 2010/0194318 A1 beschreibt ein Antriebssystem für eine Mehrzahl von elektrischen Antriebsmotoren. Das System umfasst zwei Energiespeicher, wobei der eine Energiespeicher als eine Brennstoffzelle und der andere Energiespeicher als eine Batterie ausgeführt ist. Das dargestellte Verfahren betrifft lediglich einen Fahrbetrieb des Kraftfahrzeugs, bei dem abhängig von einer in der Brennstoffzelle erzeugten elektrischen Leistung eine Zuteilung eines zu stellenden Antriebsmoments auf die Mehrzahl der elektrischen Motoren erfolgt.

Der Erfindung liegt die Aufgabe zugrunde, ein verbessertes Verfahren zum Betrieb eines Kraftfahrzeuges mit mehreren elektrischen Maschinen anzugeben.

Zur Lösung dieser Aufgabe ist erfindungsgemäß ein Verfahren mit den Merkmalen des Anspruchs 1 vorgesehen.

Die mit dem ersten Knoten des Bordnetzes verbundene erste elektrische Maschine kann sich beispielsweise an einer Vorderachse des Kraftfahrzeuges befinden und die zweite elektrische Maschine, welche mit dem zweiten Knoten verbunden ist, kann beispielsweise an der Hinterachse des Kraftfahrzeugs angeordnet sein. Aufgrund der Anordnung der ersten elektrischen Maschine und der zweiten elektrischen Maschine an unterschiedlichen Orten im Kraftfahrzeug, erfolgt auch der Anschluss dieser elektrischen Maschinen an das Bordnetz des Kraftfahrzeuges an unterschiedlichen, räumlich voneinander beabstandeten und über eine Leitung verbundenen Knoten des Bordnetzes. Sowohl die erste elektrische Maschine als auch die zweite elektrische Maschine sind mechanisch mit einer Antriebsstrangkomponente gekoppelt, wodurch eine Bewegung des Kraftfahrzeuges zur Erzeugung von elektrischer Energie in jeder der elektrischen Maschinen umgesetzt werden kann, mithin also die erste elektrische Maschine und die zweite elektrische Maschine in einem Rekuperationsbetrieb betrieben werden können.

Die erste elektrische Maschine und/oder die zweite elektrische Maschine können dabei z. B. Traktionselektromotoren eines Kraftfahrzeuges mit rein elektrischem Antrieb sein oder es kann beispielsweise die erste Maschine ein Startergenerator eines Verbrennungsmotors und die zweite Maschine ein Traktionselektromotor bei einem Kraftfahrzeug mit Hybridantrieb sein. Die Kopplung zu einer Antriebsstrangkomponente kann beispielsweise über ein Getriebe, einen Riementrieb und/oder eine Kupplung erfolgen. Es ist auch möglich, dass ein Traktionselektromotor direkt mit einem Rad des Kraftfahrzeuges gekoppelt ist. Eine Kopplung eines Startergenerators mit einer Antriebsstrangkomponenten kann beispielsweise über einen Riementrieb erfolgen, mit welchem der Startermotor mit dem Verbrennungsmotor und/oder einer weiteren Antriebsstrangkomponente verbunden ist.

In einem Rekuperationsbetrieb der ersten und der zweiten elektrischen Maschine kann von jeder der elektrischen Maschinen eine elektrische Leistung erzeugt werden. Durch die Berücksichtigung einer Leistungsbedarfsinformation, welche wenigstens einen Leistungsbedarf an dem ersten Knoten und einen Leistungsbedarf an dem zweiten Knoten beschreibt, wird es vorteilhaft ermöglicht, die jeweils von der ersten und der zweiten elektrischen Maschine rekuperierte Leistung abhängig von dem jeweils am ersten Knoten und am zweiten Knoten bestehenden Leistungsbedarf zu erzeugen. Der am ersten Knoten bzw. am zweiten Knoten bestehende Leistungsbedarf kann insbesondere durch ebenfalls an dem ersten Knoten bzw. dem zweiten Knoten angeschlossene elektrische Verbraucher entstehen. Bei einem Verbraucher kann es sich beispielsweise um einen Heizer, einen Klimakompressor oder einen elektrischen Verdichter handeln. Durch das erfindungsgemäße Verfahren wird es vorteilhaft ermöglicht, die von der ersten elektrischen Maschine und von der zweiten elektrischen Maschine jeweils im Rekuperationsbetrieb erzeugte elektrische Leistung an den bestehenden Leistungsbedarf am erste Knoten bzw. am zweiten Knoten anzupassen.

Erfindungsgemäß kann vorgesehen sein, dass die erste elektrische Maschine und die zweite elektrische Maschine in dem Rekuperationsbetrieb derart betrieben werden, dass ein Leistungsfluss zwischen dem ersten Knoten und dem zweiten Knoten minimal wird und/oder dass eine Spannungsdifferenz zwischen dem ersten Knoten und dem zweiten Knoten minimal wird. Das Minimieren eines Leistungsflusses über die Leitung, mit welcher der erste Knoten und der zweite Knoten verbunden sind, ermöglicht es vorteilhaft, ohmsche Verluste in dieser Leitung aufgrund eines Leistungstransfer von beispielsweise am ersten Knoten erzeugter, jedoch am zweiten Knoten benötigter Leistung zu vermeiden. Ein Leistungsfluss zwischen dem ersten Knoten und dem zweiten Knoten bzw. eine Spannungsdifferenz zwischen dem ersten und dem zweiten Knoten können beispielsweise dadurch minimiert werden, dass von der ersten elektrischen Maschine eine elektrische Leistung erzeugt wird, welche den Leistungsbedarf am ersten Knoten entspricht. Entsprechend kann von der zweiten elektrischen Maschine im zweiten Knoten eine elektrische Leistung erzeugt werden, welche dem Leistungsbedarf im zweiten Knoten entspricht. In diesem Fall muss über die Leitung zwischen dem ersten Knoten und dem zweiten Knoten keine Leistung transportiert werden und es ergibt sich, in Bezug zu einem gemeinsamen Massepunkt, keine Spannungsdifferenz zwischen dem ersten und dem zweiten Knoten. Das Vermeiden von ohmschen Verlusten im Bordnetz bzw. in der elektrischen Leitung zwischen dem ersten Knoten und dem zweiten Knoten erhöht die Effizienz des Kraftfahrzeugs, da der Anteil der rekuperierten elektrischen Leistung, welche in Wärme umgewandelt wird, reduziert werden kann.

Für die Leistungsbedarfsinformation ist erfindungsgemäß vorgesehen, dass sie in Abhängigkeit eines aktuellen Leistungsbedarfs oder eines prädizierten Leistungsbedarfs eines elektrischen Verbrauchers oder mehrerer elektrischer Verbraucher, welcher oder welche jeweils an dem ersten Knoten oder an dem zweiten Knoten mit dem Bordnetz verbunden ist oder sind, ermittelt wird. Ein aktueller Leistungsbedarf eines elektrischen Verbrauchers kann beispielsweise von dem elektrischen Verbraucher selbst bestimmt und an ein Steuergerät, welches die Leistungsbedarfsinformation ermittelt, übertragen werden. Dazu können beispielsweise die am ersten Knoten und am zweiten Knoten angeschlossenen elektrischen Verbraucher des Kraftfahrzeuges über ein Bussystem mit dem Steuergerät kommunizieren. Auf diese Weise kann dynamisch entsprechend des jeweils an den Knoten vorliegenden Leistungsbedarfs durch die erste und die zweite elektrische Maschine elektrische Energie erzeugt werden. Zusätzlich oder alternativ dazu ist es möglich, dass der Leistungsbedarf durch das Steuergerät auf Grundlage von im Steuergerät hinterlegten Daten prädiziert wird. Dabei kann beispielsweise für einen permanent aktivierten Verbraucher oder einen Verbraucher im eingeschalteten Zustand ein festgelegter Leistungsbedarf angenommen werden.

Der Leistungsbedarf der einzelnen elektrischen Verbraucher am ersten Knoten und am zweiten Knoten kann auch über einen Strombedarf bei vorgegebener Spannung, einem Spannungsbedarf bei vorgegebenem Strom oder einen Strombedarf und einen Spannungsbedarf angegeben werden, da auch aus diesen Größen, beispielsweise durch das Steuergerät, ein Leistungsbedarf an den jeweiligen Knoten ermittelt werden kann.

Erfindungsgemäß ist vorgesehen, dass die Leistungsbedarfsinformation in Abhängigkeit eines minimalen Leistungsbedarfs und/oder eines maximalen Leistungsbedarfs eines elektrischen Verbrauchers oder mehrerer elektrischer Verbraucher, welcher oder welche jeweils an dem ersten Knoten oder an dem zweiten Knoten mit dem Bordnetz verbunden ist oder sind, ermittelt wird. Dabei kann auf Grundlage des minimalen Leistungsbedarfs jedes Verbrauchers und des maximalen Leistungsbedarfs jedes Verbrauchers an einem Knoten auch ein minimaler Leistungsbedarf bzw. ein maximaler Leistungsbedarf des Knoten bestimmt werden. Die von der ersten elektrischen Maschine und die von der zweiten elektrischen Maschine jeweils erzeugte elektrische Leistung im Rekuperationsbetrieb kann in Abhängigkeit des jeweilig bestimmten minimalen und maximalen Leistungsbedarfs jedes Knoten eingestellt werden, so dass beispielsweise ein möglichst geringer Leistungstransport über die elektrische Leitung zwischen dem ersten und dem zweiten Knoten im Intervall zwischen dem jeweilig minimalen und maximalen Leistungsbedarf an dem ersten bzw. dem zweiten Knoten erreicht wird.

Für die Leistungsbedarfsinformation kann erfindungsgemäß vorgesehen sein, dass sie in Abhängigkeit einer Zeitinformation ermittelt wird, wobei die Zeitinformation für wenigstens einen Teil der Verbraucher eine durchschnittliche Zeitspanne beschreibt, für welche der Leistungsbedarf des jeweiligen Verbrauchers besteht. Bei der Bestimmung des Leistungsbedarfs an einem Knoten kann durch die Berücksichtigung einer Zeitinformation der Einfluss einer durchschnittlichen Zeitspanne, an der einer oder mehrere der Verbraucher an einem Knoten Leistung benötigt, berücksichtigt werden. Es ist beispielsweise möglich, dass ein Verbraucher nur für eine gewisse Zeitspanne einen Leistungsbedarf aufweist, wobei sich der Leistungsbedarf nach der Zeitspanne ändert oder er, beispielsweise beim Abschalten des Verbrauchers, zu null wird. Die durchschnittliche Zeitspanne kann dabei angeben, wie lange der Leistungsbedarf des Verbrauchers typischerweise, beispielsweise als Mittelwert der Zeitspannen mehrerer einen Leistungsbedarf erzeugenden Betriebsphasen des Verbrauchers, besteht. Die durchschnittliche Zeitspanne eines Verbrauchers kann dabei dem Steuergerät hinterlegt sein oder von diesem aus Betriebsinformationen des Verbrauchers ermittelt werden. Abhängig von der Zeitinformation kann auch ein Zeitpunkt festgelegt werden, an dem eine erneute Ermittlung einer Leistungsbedarfsinformation sowie eine Einstellung der von der ersten und der zweiten elektrischen Maschine rekuperierten elektrischen Leistung erfolgt.

Erfindungsgemäß kann vorgesehen sein, dass ein Leistungsbedarf mit einer durchschnittlichen Zeitspanne, welche kleiner als ein vorgegebener Grenzwert ist, nicht berücksichtigt wird. Dies ermöglicht es vorteilhaft, den Leistungsbedarf von Verbrauchern, welche ihren Leistungsbedarf, beispielsweise aufgrund einer aktiven Regelung einer Funktion des Verbrauchers und/oder durch ein häufiges Zu- bzw. Abschalten des Verbrauchers, häufig ändern, nicht zu berücksichtigen, wenn die durchschnittliche Zeitspanne des Leistungsbedarfs kleiner als ein vorgegebener Grenzwert ist. Auf diese Weise kann es vorteilhaft vermieden werden, dass eine Einstellung der elektrischen Leistung, welche von der ersten bzw. der zweiten elektrischen Maschine im Rekuperationsbetrieb erzeugt wird, auf Grundlage eines nur kurzfristig bestehenden bzw. sich zeitlich schnell ändernden Leistungsbedarfs ermittelt wird.

Erfindungsgemäß kann vorgesehen sein, dass der Grenzwert in Abhängigkeit einer aus Betriebsparametern des Kraftfahrzeugs prädizierten Rekuperationsdauer bestimmt wird. Die Rekuperationsdauer beschreibt dabei eine voraussichtliche Dauer eines Rekuperationsbetriebs und kann beispielsweise vor oder bei einem Beginn des Rekuperationsbetriebs aus Betriebsparametern des Kraftfahrzeugs prädiziert werden. Auf diese Weise kann abhängig von der voraussichtlichen Dauer, mit welcher über die erste elektrische Maschine und die zweite elektrische Maschine elektrische Leistung erzeugt wird, ausgewählt werden, von welchen Verbrauchern ein Leistungsbedarf berücksichtigt wird.

Erfindungsgemäß kann vorgesehen sein, dass die Leistungsbedarfsinformation wenigstens einen Leistungsbedarf an wenigstens einem weiteren Knoten, welcher mit dem ersten und/oder dem zweiten Knoten verbunden ist, beschreibt. Auf diese Weise kann berücksichtigt werden, ob beispielsweise bei einem dritten Knoten, welcher räumlich zwischen dem ersten und dem zweiten Knoten liegt und mit dem ersten Knoten sowie mit dem zweiten Knoten jeweils über eine Leitung verbunden ist, ein Leistungsbedarf besteht, so dass die gegebenenfalls am dritten Knoten benötigte Leistung von der ersten elektrischen Maschine und/oder der zweiten elektrischen Maschine erzeugt werden kann.

In einer bevorzugten Ausgestaltung der Erfindung kann vorgesehen sein, dass der erste Knoten und/oder der zweiten Knoten jeweils mit einem Energiespeicher verbunden ist, wobei der oder die Energiespeicher jeweils über von der mit demselben Knoten verbundenen elektrischen Maschine geladen werden. Auf diese Weise kann vermieden werden, dass ein beispielsweise an einem zweiten Knoten in der Umgebung einer Hinterachse des Kraftfahrzeugs angeordneter Energiespeicher mit Energie geladen wird, welche über eine am ersten Knoten angeschlossene elektrische Maschine im Bereich der Vorderachse des Kraftfahrzeugs erzeugt wird. Einem Energiespeicher kann dabei insbesondere elektrische Leistung zugeführt werden, welche den Leistungsbedarf der Verbraucher an einem Knoten übersteigt.

Erfindungsgemäß kann vorgesehen sein, dass als erste elektrische Maschine ein Startergenerator und als zweite elektrische Maschine ein elektrischer Traktionsmotor verwendet wird. Der Startergenerator kann dabei mit einem Verbrennungsmotor des Kraftfahrzeugs gekoppelt sein, wobei durch den Verbrennungsmotor und den elektrischen Traktionsmotor insbesondere ein Hybridantrieb des Kraftfahrzeugs gebildet werden kann.

Für ein erfindungsgemäßes Kraftfahrzeug ist gemäß Anspruch 9 vorgesehen, dass das Kraftfahrzeug ein Steuergerät und wenigstens zwei mechanisch mit einer jeweiligen Antriebsstrangkomponente gekoppelte elektrische Maschinen umfasst, wobei eine erste der elektrischen Maschinen an einem ersten Knoten mit einem Bordnetz des Kraftfahrzeugs verbunden ist und eine zweite der elektrischen Maschinen an einem zweiten Knoten mit dem Bordnetz des Kraftfahrzeuges verbunden ist, wobei der ersten Knoten und der zweite Knoten räumlich beabstandet und durch wenigstens eine elektrische Leitung verbunden sind, wobei das Steuergerät zur Durchführung eines erfindungsgemäßen Verfahrens ausgebildet ist. Das Steuergerät ist dabei insbesondere dazu eingerichtet, die Leistungsbedarfsinformation zu ermitteln und bei einem Rekuperationsbetrieb des Kraftfahrzeugs die erste und die zweite elektrische Maschine anzusteuern. Weiterhin kann das Kraftfahrzeug einen oder mehrere elektrische Verbraucher umfassen, welche jeweils an dem ersten Knoten oder dem zweiten Knoten angeschlossen sind. Bei einem Verbraucher kann es sich beispielsweise um einen Heizer, einen Klimakompressor oder einen elektrischen Verdichter des Kraftfahrzeuges handeln. Weiterhin kann das Kraftfahrzeug einen oder mehrere Energiespeicher umfassen, welche jeweils an dem ersten Knoten oder an dem zweiten Knoten mit dem Bordnetz verbunden sind. Die Verbraucher des Kraftfahrzeuges oder die Energiespeicher des Kraftfahrzeuges können mit dem Steuergerät beispielsweise über einen Datenbus des Kraftfahrzeuges kommunizieren und dabei beispielsweise dem Steuergerät ihren jeweiligen Leistungsbedarf zur Ermittlung der Leistungsbedarfsinformation übertragen.

Sämtliche Vorteile und Ausgestaltungen, welche in Bezug zu dem erfindungsgemäßen Verfahren beschrieben wurden, gelten entsprechend auch für das erfindungsgemäße Kraftfahrzeug.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine schematische Seitenansicht eines erfindungsgemäßen Kraftfahrzeuges und
- Fig. 2: ein Blockschaltbild eines Ausführungsbeispiels eines erfindungsgemäßen Verfahrens.

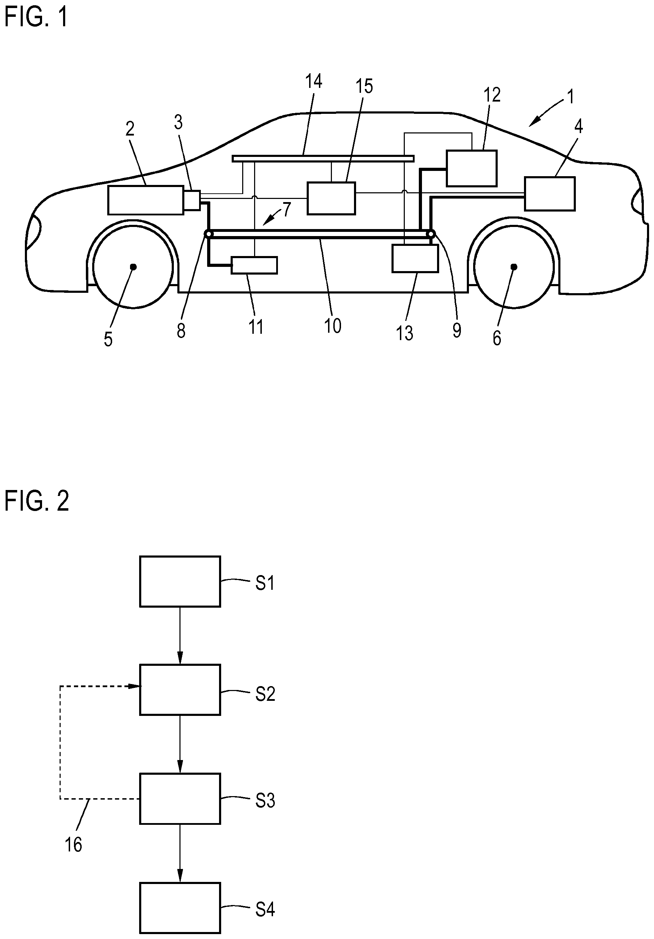

In Fig. 1 ist eine schematische Seitenansicht eines erfindungsgemäßen Kraftfahrzeugs 1 dargestellt. Das Kraftfahrzeug 1 weist einen Hybridantrieb auf und umfasst einen Verbrennungsmotor 2 sowie eine als Startergenerator ausgebildete erste elektrische Maschine 3. Der Verbrennungsmotor 2 sowie die erste elektrische Maschine 3 sind im Bereich einer Vorderachse 5 des Kraftfahrzeuges 1 angeordnet. Weiterhin umfasst das Kraftfahrzeug 1 eine zweite elektrische Maschine 4, welche im Bereich einer Hinterachse 6 des Kraftfahrzeuges angeordnet ist. Die erste elektrische Maschine 3 ist, beispielsweise über den Verbrennungsmotor 2, mit einer Antriebsstrangkomponente, beispielsweise mit der Vorderachse 5 gekoppelt. Ebenso ist die zweite elektrische Maschine 4 mit einer Antriebsstrangkomponente des Kraftfahrzeuges 1, beispielsweise mit der Hinterachse 6 des Kraftfahrzeuges 1, gekoppelt. Auf diese Weise kann in einem Rekuperationsbetrieb der ersten elektrischen Maschine 3 sowie der zweiten elektrischen Maschine 4 Bewegungsenergie des Kraftfahrzeuges 1 in elektrische Energie umgewandelt werden.

Das Kraftfahrzeug 1 umfasst weiterhin ein Bordnetz 7 mit einem ersten Knoten 8 und einem zweiten Knoten 9, welche über eine Leitung 10 miteinander verbunden sind. Der erste Knoten 8 befindet sich dabei im Bereich der Vorderachse 5 des Kraftfahrzeugs und der zweite Knoten 9 im Bereich der Hinterachse 6 des Kraftfahrzeuges 1. Die erste elektrische Maschine 3 ist dabei an dem ersten Knoten 8 des Bordnetzes 7 angeschlossen. Ebenfalls am ersten Knoten 8 angeschlossen ist ein elektrischer Verbraucher 11, welcher beispielsweise als Klimakompressor ausgeführt ist. Am zweiten Knoten 9 ist die zweite elektrische Maschine 4 sowie ein Energiespeicher 12 des Kraftfahrzeuges und ein zweiter elektrischer Verbraucher 13, welcher beispielsweise als Heizelement ausgeführt ist, angeschlossen. Die elektrischen Verbraucher 11 und 13 sowie der Energiespeicher 12 kommunizieren über einen Datenbus 14 des Kraftfahrzeuges 1 mit einem Steuergerät 15 des Kraftfahrzeuges 1.

Das Steuergerät 15 ist mit der ersten elektrischen Maschine 3 sowie der zweiten elektrischen Maschine 4 direkt und/oder über den Datenbus 14 verbunden. In einem Rekuperationsbetrieb des Kraftfahrzeuges 1, also während der Umwandlung von mechanischer Bewegungsenergie des Kraftfahrzeuges 1 in elektrische Energie durch die erste elektrische Maschine 3 und die zweite elektrische Maschine 4 wird durch das Steuergerät 15 eine Leistungsbedarfsinformation ermittelt, welche einen Leistungsbedarf an dem ersten Knoten 8 sowie einen Leistungsbedarf an dem zweiten Knoten 9 beschreibt. In diesem Beispiel besteht der Leistungsbedarf am ersten Knoten 8 aus dem Leistungsbedarf des Verbrauchers 11. Der Leistungsbedarf am zweiten Knoten 9 besteht entsprechend aus dem Leistungsbedarf des Verbrauchers 13 sowie dem Leistungsbedarf des Energiespeichers 12. Selbstverständlich kann es vorgesehen sein, dass am ersten Knoten 8 und/oder am zweiten Knoten 9 mehr als nur ein Verbraucher angeschlossen ist, wobei sich bei mehreren Verbrauchern an einem Knoten der jeweilige Leistungsbedarf der Verbraucher zu dem Gesamtleistungsbedarf am Knoten addieren.

In Abhängigkeit des Leistungsbedarfs am ersten Knoten 8 und des Leistungsbedarfs am zweiten Knoten 9 wird durch das Steuergerät 15 eine Ansteuerung der ersten elektrischen Maschine 3 und der zweiten elektrischen Maschine 4 im Rekuperationsbetrieb vorgenommen. Das Steuergerät 15 wirkt mithin als ein Koordinator für eine Verteilung der zu rekuperierenden Energie. Die Ansteuerung der ersten elektrischen Maschine 3 sowie der zweiten elektrischen Maschine 4 kann dabei derart erfolgen, dass durch die erste elektrische Maschine 3 eine elektrische Leistung erzeugt wird, welche dem Leistungsbedarf am ersten Knoten 8 entspricht. Entsprechend kann durch die zweite elektrische Maschine 4 eine elektrische Leistung erzeugt werden, welche dem Leistungsbedarf am zweiten Knoten 9 entspricht. Auf diese Weise kann es vermieden werden, dass durch die erste elektrische Maschine 3 erzeugte Leistung über die Leitung 10 zum zweiten Knoten 9 transportiert werden muss, was zu ohmschen Verlusten in der Leitung 10 führen würde. Um eine maximal mögliche Energiemenge rekuperieren zu können, kann beispielsweise der Leistungsbedarf des Energiespeichers 12 an eine maximal zu rekuperiende Energie angepasst werden, wobei der Leistungsbedarf des Energiespeichers 12 am zweiten Knoten 9 von der zweiten elektrischen Maschine 4 erzeugt wird.

In Fig. 2 ist ein schematisches Blockdiagramm eines erfindungsgemäßen Verfahrens dargestellt. Dabei bezeichnen die einzelnen Schritte

| | |
|---|---|
| S1 | Start |

| | |
|---|---|
| S2 | Ermittlung der Leistungsbedarfsinformation |
| S3 | Erzeugung der elektrischen Leistung |
| S4 | Ende |

Das Verfahren startet in Schritt S1 vor oder während dem Beginn eines Rekuperationsbetriebes der ersten elektrischen Maschine 3 und der zweiten elektrischen Maschine 4. Zunächst erfolgt in Schritt S2 die Ermittlung einer Leistungsbedarfsinformation, welche einen elektrischen Leistungsbedarf am ersten Knoten 8 sowie einen elektrischen Leistungsbedarf am zweiten Knoten 9 beschreibt. Dazu werden von dem Verbraucher 11 am ersten Knoten 8 sowie dem Verbraucher 13 am zweiten Knoten 9 jeweils ein aktueller Leistungsbedarf an das Steuergerät 15 über den Datenbus 14 übermittelt. Ein gegebenenfalls vorhandener Leistungsbedarf des Energiespeichers 12 kann beispielsweise von dem Steuergerät 15 ermittelt werden. Abhängig von dem jeweiligen aktuellen Leistungsbedarf der Verbraucher 11, 13 und/oder dem Leistungsbedarf des Energiespeichers 12 kann das Steuergerät 15 die Leistungsbedarfsinformation für den jeweiligen Knoten ermitteln. Zusätzlich oder alternativ dazu ist es möglich, dass das Steuergerät 15 einen Leistungsbedarf am ersten Knoten 8 und am zweiten Knoten 9, beispielsweise unter Rückgriff auf im Steuergerät 15 hinterlegte Daten, prädiziert. Es ist auch möglich, dass von dem Verbraucher 11, dem Verbraucher 13 sowie des Energiespeichers 12 jeweils ein minimaler Leistungsbedarf und ein maximaler Leistungsbedarf an das Steuergerät 15 übermittelt werden, wobei das Steuergerät 15 aus diesen Werten jeweils einen Leistungsbedarf am ersten Knoten 8 und am zweiten Knoten 9 ermittelt.

Es ist möglich, dass die Leistungsbedarfsinformation in Abhängigkeit einer Zeitinformation ermittelt wird, welche für die Verbraucher 11, 13 und/oder den Energiespeicher 12 eine Zeitspanne beschreibt, in welchem der jeweilige Leistungsbedarf des Verbrauchers bzw. des Energiespeichers 12 besteht. Dabei kann ein Leistungsbedarf eines Verbrauchers, dessen durchschnittliche Zeitspanne kleiner als ein in Abhängigkeit einer voraussichtlichen Rekuperationsdauer bestimmter Grenzwert ist, unberücksichtigt bleiben. Die Zeitinformation kann von dem Steuergerät 15 auf Grundlage von im Steuergerät 15 hinterlegter Daten ermittelt werden. Zusätzlich oder alternativ dazu ist es auch möglich, dass von den Verbrauchern 11, 13 und/oder dem Energiespeicher 12 eine die jeweils durchschnittliche Zeitspanne ihres Leistungsbedarfs beschreibende Information an das Steuergerät 15 zur Ermittlung der Zeitinformation übertragen werden.

In Schritt S3 erfolgt ein Einstellen der jeweils über die erste elektrische Maschine 3 sowie die zweite elektrische Maschine 4 rekuperierten Leistung über das Steuergerät 15 derart, dass ein Leistungsfluss zwischen dem ersten Knoten 8 und dem zweiten Knoten 9 minimal wird bzw. dass eine Spannungsdifferenz zwischen dem ersten Knoten 8 und dem zweiten Knoten 9 minimal wird. Das Steuergerät 15 kann dazu beispielsweise eine Ansteuerung einer Leistungselektronik der ersten elektrischen Maschine 3 bzw. der zweiten elektrischen Maschine 4 vornehmen. Wie durch den Pfeil 16 angedeutet ist, kann nach der Anpassung der elektrischen Leistung eine erneute Ermittlung einer Leistungsbedarfsinformation erfolgen. Dies kann beispielsweise nach Ablauf der von der Zeitinformation für wenigstens einen Teil der Verbraucher beschriebenen, durchschnittlichen Zeitspanne, in welcher der Leistungsbedarf des jeweiligen Verbrauchers besteht, erfolgen. Auf diese Weise ist eine dynamische Anpassung der über die elektrischen Maschinen 3, 4 rekuperierten Leistungen in Abhängigkeit eines zeitabhängigen Leistungsbedarfs eines Verbrauchers 11, 13 des Kraftfahrzeuges 1 möglich.

Das Verfahren endet in Schritt S4 beispielsweise bei Beendigung des Rekuperationsbetriebes des Kraftfahrzeugs 1.

Es ist möglich, dass das Kraftfahrzeug 1 keinen Verbrennungsmotor 2 umfasst, wobei die erste elektrische Maschine 3 nicht als Startergenerator sondern als weiterer Traktionsmotor des Kraftfahrzeuges 1 ausgeführt ist. Es ist auch möglich, dass am ersten Knoten 8 mehr als eine erste elektrische Maschine bzw. am zweiten Knoten 9 mehr als eine zweite elektrische Maschine angeschlossen ist. Bei zwei an einem Knoten angeschlossenen elektrischen Maschine kann es sich beispielsweise um radgekoppelte Elektromaschinen, beispielsweise Radnabenmotoren, handeln. In diesem Fall kann eine Ansteuerung von zwei an einem Knoten angeschlossenen ersten oder zweiten elektrischen Maschinen derart erfolgen, dass die elektrischen Maschinen gemeinsam eine elektrische Leistung erzeugen, welche dem Leistungsbedarf an dem jeweiligen Knoten entspricht. Dabei kann insbesondere vorgesehen sein, dass jede der beiden Maschinen die Hälfte des Leistungsbedarfs des Knoten als elektrische Leistung bereitstellt oder dass die jeweilige elektrische Leistung abhängig von einem von der jeweiligen elektrischen Maschine zu erzeugenden Bremsmoment verteilt wird. Es ist auch möglich, dass bei einer Einstellung der von der ersten elektrischen Maschine 3 und der zweiten elektrischen Maschine 4 erzeugten elektrischen Leistung ein Leistungsbedarf an einem weiteren, beispielsweise zwischen dem ersten Knoten 8 und dem zweiten Knoten 9 liegenden, Knoten berücksichtigt wird, so dass über eine oder beide der elektrischen Maschinen 3, 4 auch ein Teil der am weiteren Knoten benötigten elektrischen Leistung erzeugt wird.

## Patentansprüche

1. Verfahren zum Betrieb eines Kraftfahrzeugs (1), wobei das Kraftfahrzeug (1) wenigstens zwei mechanisch mit einer jeweiligen Antriebsstrangkomponente gekoppelte elektrische Maschinen (3, 4) umfasst, wobei eine erste der elektrischen Maschinen (3) an einem ersten Knoten (8) mit einem Bordnetz (7) des Kraftfahrzeuges (1) verbunden ist und eine zweite der elektrischen Maschinen (4) an einem zweiten Knoten (9) mit dem Bordnetz (7) des Kraftfahrzeuges (1) verbunden ist, wobei der erste Knoten (8) und der zweite Knoten (9) räumlich beabstandet und durch wenigstens eine elektrische Leitung (10) verbunden sind, wobei bei einem Rekuperationsbetrieb der ersten und der zweiten elektrischen Maschine (3, 4) mit verbundenen Knoten von jeder der elektrischen Maschinen (3, 4) eine elektrische Leistung in Abhängigkeit einer Leistungsbedarfsinformation, welche wenigstens einen Leistungsbedarf an dem ersten Knoten (8) und einen Leistungsbedarf an dem zweiten Knoten (9) beschreibt, erzeugt wird, wobei die Leistungsbedarfsinformation in Abhängigkeit eines aktuellen Leistungsbedarfs und/oder eines prädizierten Leistungsbedarfs und/oder eines minimalen Leistungsbedarfs und/oder eines maximalen Leistungsbedarfs eines elektrischen Verbrauchers (11, 13) oder mehrerer elektrischer Verbraucher (11, 13), welcher oder welche jeweils an dem ersten Knoten (8) oder an dem zweiten Knoten (9) mit dem Bordnetz (7) verbunden ist oder sind, ermittelt wird.

2. Verfahren nach Anspruch 1,
**dadurch gekennzeichnet,**
**dass** die erste elektrische Maschine (3) und die zweite elektrische Maschine (4) in dem Rekuperationsbetrieb derart betrieben werden, dass ein Leistungsfluss zwischen dem ersten Knoten und dem zweiten Knoten minimal wird und/oder dass eine Spannungsdifferenz zwischen dem ersten Knoten (8) und dem zweiten Knoten (9) minimal wird.

3. Verfahren nach Anspruch 1 oder 2,
**dadurch gekennzeichnet,**
**dass** die Leistungsbedarfsinformation in Abhängigkeit einer Zeitinformation ermittelt wird, wobei die Zeitinformation für wenigstens einen Teil der Verbraucher (11, 13) eine durchschnittliche Zeitspanne beschreibt, für welche der Leistungsbedarf des jeweiligen Verbrauchers (11, 13) besteht.

4. Verfahren nach Anspruch 3,
**dadurch gekennzeichnet,**
**dass** ein Leistungsbedarf mit einer durchschnittlichen Zeitspanne, welche kleiner als ein vorgegebener Grenzwert ist, nicht berücksichtigt wird.

5. Verfahren nach Anspruch 4,
**dadurch gekennzeichnet,**
**dass** der Grenzwert in Abhängigkeit einer aus Betriebsparametern des Kraftfahrzeugs (1) prädizierten Rekuperationsdauer bestimmt wird.

6. Verfahren nach einem der vorangehenden Ansprüche,
**dadurch gekennzeichnet,**
**dass** die Leistungsbedarfsinformation wenigstens einen Leistungsbedarf an wenigstens einem weiteren Knoten, welcher mit dem ersten Knoten (8) und/oder dem zweiten Knoten (9) verbunden ist, beschreibt.

7. Verfahren nach einem der vorangehenden Ansprüche,
**dadurch gekennzeichnet,**
**dass** der erste Knoten (8) und/oder der zweite Knoten (9) jeweils mit einem Energiespeicher verbunden ist, wobei der oder die Energiespeicher jeweils von der mit demselben Knoten (8, 9) verbundenen elektrischen Maschine (3, 4) geladen werden.

8. Verfahren nach einem der vorangehenden Ansprüche,
**dadurch gekennzeichnet,**
**dass** als erste elektrische Maschine (3) ein Startergenerator und als zweite elektrische Maschine (4) ein elektrischer Traktionsmotor verwendet werden.

9. Kraftfahrzeug umfassend ein Steuergerät (15) und wenigstens zwei mechanisch mit einer jeweiligen Antriebsstrangkomponente gekoppelte elektrische Maschinen (3, 4), wobei eine erste der elektrischen Maschinen (3) an einem ersten Knoten (8) mit einem Bordnetz (7) des Kraftfahrzeuges (1) verbunden ist und eine zweite der elektrischen Maschinen (4) an einem zweiten Knoten (9) mit dem Bordnetz (7) des Kraftfahrzeuges (1) verbunden ist, wobei der erste Knoten (8) und der zweite Knoten (9) räumlich beabstandet und durch wenigstens eine elektrische Leitung (10) verbunden sind, wobei das Steuergerät (15) zur Durchführung eines Verfahrens nach einem der vorangehenden Ansprüche ausgebildet ist.

## Claims

1. Method for operating a motor vehicle (1), wherein the motor vehicle (1) comprises at least two electrical machines (3, 4) coupled mechanically to a respective drive train component, wherein a first of the electrical machines (3) is connected at a first node (8) to an electrical system (7) of the motor vehicle (1) and a second of the electrical machines (4) is connected at a second node (9) to the electrical system (7) of the motor vehicle (1), wherein the first node (8) and the second node (9) are spaced apart spatially and are connected by at least one electrical line (10), wherein in a recovery mode of the first and the second electrical machine (3, 4) with connected nodes an electric power is generated by each of the electrical machines (3, 4) as a function of a power demand information, which describes at least a power demand at the first node (8) and a power demand at the second node (9), wherein the power demand information is determined as a function of a current power demand and/or a predicted power demand and/or a minimum power demand and/or a maximum power demand of an electrical user (11, 13) or more electrical users (11, 13), which is or are connected respectively to the electrical system (7) at the first node (8) or at the second node (9).

2. Method according to claim 1,
**characterized in that**
the first electrical machine (3) and the second electrical machine (4) are operated in the recovery mode such that a power flow between the first node and the second node is minimal and/or that a voltage difference between the first node (8) and the second node (9) is minimal.

3. Method according to claim 1 or 2,
**characterized in that**
the power demand information is determined as a function of time information, wherein the time information for at least some of the users (11, 13) describes an average time period for which the power demand of the respective user (11, 13) exists.

4. Method according to claim 3,
**characterized in that**
a power demand with an average time period which is less than a predetermined limit value is not taken into account.

5. Method according to claim 4,
**characterized in that**
the limit value is specified as a function of a recovery period predicted from operating parameters of the motor vehicle (1).

6. Method according to any one of the preceding claims,
**characterized in that**
the power demand information describes at least one power demand at at least one further node, which is connected to the first node (8) and/or the second node (9).

7. Method according to any one of the preceding claims,
**characterized in that**
the first node (8) and/or the second node (9) is/are each connected to an energy store, wherein the energy store(s) is/are charged respectively by the electrical machine (3, 4) connected to the same node (8, 9).

8. Method according to any one of the preceding claims,
**characterized in that**
a starter generator is used as the first electrical machine (3) and an electric traction motor is used as the second electrical machine (4).

9. Motor vehicle comprising a control device (15) and at least two electrical machines (3, 4) mechanically coupled to a respective drive train component, wherein a first of the electrical machines (3) is connected at a first node (8) to an electrical system (7) of the motor vehicle (1) and a second of the electrical machines (4) is connected at a second node (9) to the electrical system (7) of the motor vehicle (1), wherein the first node (8) and the second node (9) are spaced apart spatially and are connected by at least one electrical line (10), wherein the control device (15) is configured to carry out a method according to any one of the preceding claims.

## Revendications

1. Procédé de fonctionnement d'un véhicule automobile (1), dans lequel le véhicule automobile (1) comprend au moins deux machines électriques (3, 4) couplées mécaniquement à un composant de chaîne cinématique respectif, dans lequel une première des machines électriques (3) est connectée à un réseau de bord (7) du véhicule automobile (1) au niveau d'un premier noeud (8) et une seconde des machines électriques (4) est connectée au réseau de bord (7) du véhicule automobile (1) au niveau d'un second noeud (9), dans lequel le premier noeud (8) et le second noeud (9) sont espacés spatialement et connectés par au moins un câble électrique (10), dans lequel, lors d'un mode de récupération de la première et de la seconde machines électriques (3, 4) avec des noeuds connectés, une puissance électrique est générée par chacune des machines électriques (3, 4) en fonction d'une information de besoin de puissance qui décrit au moins un besoin de puissance au niveau du premier noeud (8) et un besoin de puissance au niveau du second noeud (9), dans lequel l'information de besoin de puissance est déterminée en fonction d'un besoin de puissance actuel et/ou d'un besoin de puissance prédit et/ou d'un besoin de puissance minimal et/ou d'un besoin de puissance maximal d'un consommateur électrique (11, 13) ou de plusieurs consommateurs électriques (11, 13), lequel ou lesquels est ou sont respectivement connectés au réseau de bord (7) au niveau du premier noeud (8) ou au niveau du second noeud (9).

2. Procédé selon la revendication 1,
**caractérisé en ce que**
la première machine électrique (3) et la seconde machine électrique (4) sont exploitées dans le mode de récupération de sorte qu'un flux de puissance entre le premier noeud et le second noeud devienne minimal et/ou qu'une différence de tension entre le premier noeud (8) et le second noeud (9) devienne minimale.

3. Procédé selon la revendication 1 ou 2,
**caractérisé en ce que**
l'information de besoin de puissance est déterminée en fonction d'une information temporelle, dans lequel l'information temporelle décrit, pour au moins une partie des consommateurs (11, 13), une durée moyenne pendant laquelle le besoin de puissance du consommateur respectif (11, 13) existe.

4. Procédé selon la revendication 3,
**caractérisé en ce que**
un besoin de puissance avec une durée moyenne, qui est inférieure à une valeur limite prédéterminée, n'est pas pris en compte.

5. Procédé selon la revendication 4,
**caractérisé en ce que**
la valeur limite est déterminée en fonction d'une durée de récupération prédite à partir de paramètres de fonctionnement du véhicule automobile (1).

6. Procédé selon l'une quelconque des revendications précédentes,
**caractérisé en ce que**
l'information de besoin de puissance décrit au moins un besoin de puissance au niveau au moins d'un noeud supplémentaire qui est connecté au premier noeud (8) et/ou au second noeud (9).

7. Procédé selon l'une quelconque des revendications précédentes,
**caractérisé en ce que**
le premier noeud (8) et/ou le second noeud (9) est connecté respectivement à un dispositif de stockage d'énergie, dans lequel le ou les dispositifs de stockage d'énergie sont chargés respectivement par la machine électrique (3, 4) connectée au même noeud (8, 9).

8. Procédé selon l'une quelconque des revendications précédentes,
**caractérisé en ce que**
un alternateur de démarrage est utilisé en tant que première machine électrique (3) et un moteur de traction électrique en tant que seconde machine électrique (4).

9. Véhicule automobile comprenant un dispositif de commande (15) et au moins deux machines électriques (3, 4) couplées mécaniquement à un composant de chaîne cinématique respectif, dans lequel une première des machines électriques (3) est connectée à un réseau de bord (7) du véhicule automobile (1) au niveau d'un premier noeud (8) et une seconde des machines électriques (4) est connectée au réseau de bord (7) du véhicule automobile (1) au niveau d'un second noeud (9), dans lequel le premier noeud (8) et le second noeud (9) sont espacés spatialement et connectés par au moins un câble électrique (10), dans lequel le dispositif de commande (15) est conçu pour mettre en oeuvre un procédé selon l'une quelconque des revendications précédentes.
